Europäisches Patentamt

European Patent Office

Office européen des brevets

(11) Veröffentlichungsnummer: **0 214 113**
**A2**

(12) # EUROPÄISCHE PATENTANMELDUNG

(21) Anmeldenummer: 86890202.4

(22) Anmeldetag: 07.07.86

(51) Int. Cl.⁴: **F 16 F 1/46**
**B 29 C 67/14**

(30) Priorität: 03.08.85 DE 3527993

(43) Veroffentlichungstag der Anmeldung:
**11.03.87 Patentblatt 87/11**

(84) Benannte Vertragsstaaten:
**AT CH DE FR GB IT LI NL SE**

(71) Anmelder: **BÖHLER AKTIENGESELLSCHAFT**
**Hansaallee 321**
**D-4000 Düsseldorf 11(DE)**

(72) Erfinder: **Puck, Alfred, Prof. Dr.-Ing.**
**Am Ahlberg 33**
**D-3524 Immenhausen-Mariendorf(DE)**

(72) Erfinder: **Kampke, Manfred, Dipl.-Ing.**
**Im Wiesengrund 12**
**D-3500 Kassel(DE)**

(74) Vertreter: **Jellinek, Gerhard, Dr.**
**Vereinigte Edelstahlwerke AG (VEW) Elisabethstrasse 12**
**A-1010 Wien(AT)**

(54) Verfahren zur Herstellung von Blattfedern sowie Formkörper zur Durchführung des Verfahrens.

(57) Die Erfindung betrifft ein Verfahren sowie einen Formkörper zur Herstellung von Blattfedern, insbesondere Federblättern, z.B. Parabelfedern, Hyperbelfedern od. dgl. mit faserverstärktem Kunststoff, z.B. Glas-, Kohlenstoff-, Aramidfasern, wobei ein Formkörper mit zumindest teilweise im wesentlichen in und über die Längserstreckung desselben erstreckenden Fasern mit Kunststoff, wobei insbesondere aus diese(n)(m) Fasern und Kunststoff auch Augen, Gleitstücke od. dgl. der Feder einstückig geformt werden, aufgebaut und gehärtet wird, wobei der Formkörper unter, insbesondere mechanischer, Materialabtragung von Fasern und Kunststoff und gegebenenfalls mit zumindest einem weiteren Formkörper, insbesondere adhäsiv und/oder chemisch, verbunden wird, welcher vorzugsweise ebenfalls unter, insbesondere mechanischer, Materialabtragung hergestellt wird, im wesentlichen zumindest Teile der Außenform der Feder endformend gebildet werden.

EP 0 214 113 A2

Verfahren zur Herstellung von Blattfedern
sowie Formkörper zur Durchführung des
Verfahrens

Blattfedern aus faserverstärktem Kunststoff werden im wesentlichen nach zwei verschiedenen Verfahren hergestellt. Bei dem einen Verfahren werden eine Vielzahl von Schichten mit faserverstärktem teilweise ausgehärtetem Kunststoff übereinander angeordnet und mit oder ohne Zugabe von Klebstoff, Bindemittel, od. dgl. in einer Form zur endgültigen Formgebung gebracht. Die einzelnen Schichten weisen hiebei unterschiedliche Länge auf, sodaß eine Formgebung, z.B. Ausbildung zu einer Parabelfeder od. dgl. durchgeführt werden kann. Eine weitere Möglichkeit zur Formgebung besteht darin, daß ein z.B. doppelkeilförmiges Formstück ebenfalls mit in der Form angeordnet wird, welches zwischen den einzelnen Lagen zu liegen kommt, sodaß kein unnötig hoher Aufwand an Arbeit und Material gegeben ist.

Ein weiteres Verfahren zur Herstellung von Blattfedern mit faserverstärktem Kunststoff besteht darin, daß auf einem Formkern, dessen Formhöhlung in etwa der Gestalt der zu fertigenden Feder entspricht, kunststoffimprägnierte Rovings aufgewickelt werden, wobei ein im wesentlichen im Querschnitt gleichbleibender Federkörper erzeugt wird. Zur Gestaltgebung können auch hier, z.B. keilförmig ausgebildete Formkerne vorgesehen werden, welche von den Rovings umwickelt werden. Will man nach einem derartigen Verfahren Parabelfedern herstellen, so ist es erforderlich, daß diese parallel angeordneten Faserstränge der rotierenden Form zugeführt werden, die zumindest zwei oder eine Vielzahl von Formhöhlungen um ihren Umfang herum angeordnet besitzt. Die Federrohlinge werden sodenn auf der Form zu ihrer endgültigen Gestalt geformt und gleichzeitig in dieser ausgehärtet.

Wesentlich für die Funktionstüchtigkeit derartiger Federn ist, daß die in Längserstreckung der Feder orientierten Fasern keine Unstetigkeitsstellen aufweisen, welche besonders leicht bei vorgefertigten Laminaten mit unterschiedlicher Länge auftreten können, bzw. bei Gestalten auftreten können, die von der Rechtecksform der Feder, also der sogenannten Rechteckblattfeder wesentlich abweichen. Die vorliegende Erfindung hat sich nun zum Ziel gesetzt, ein Verfahren zu schaffen, mit dem die Fertigung von vielgestaltigen Federn möglich ist, wobei eine strenge Parallelorientierung der Fasern, inbesondere Glasfasern, realisiert werden kann, und das von einem Vorprodukt, dem ausgehärteten Formkörper, ausgeht, welches im wesentlichen zeitlich unbegrenzt ohne Beeinträchtigung der späteren Federqualität gelagert werden kann.

Das erfindungsgemäße Verfahren zur Herstellung von Blattfedern, insbesondere Federblättern, z.B. Parabelfedern, Hyperbelfedern, od. dgl. mit faserverstärktem Kunststoff, z.B. Glas-, Kohlenstoff-, Aramidfasern, wobei ein Formkörper mit zumindest teilweise im wesentlichen in und über die Längserstreckung desselben erstreckenden Fasern mit Kunststoff, wobei insbesondere aus diesen(m) Fasern und Kunststoff auch Augen, Gleitstücke od. dgl. der Feder einstückig geformt werden, aufgebaut und gehärtet wird, ist dadurch gekennzeichnet, daß der Formkörper unter, insbesondere mechanischer, Materialabtragung von Fasern und Kunststoff und gegebenenfalls mit zumindest einem weiteren Formkörper, insbesondere adhäsiv und/oder chemisch, verbunden wird, welcher vorzugsweise ebenfalls unter, insbesondere mechanischer, Materialabtragung hergestellt wird, im wesentlichen zumindest Teile der Außenform der Feder endformend gebildet werden. Bei einem derartigen Verfahren kann aus einem Block, welcher im wesentlichen aus faserverstärktem Kunststoff besteht, die Feder herausgearbeitet werden. Ein derartiger Block kann so wie jede Rechteckfeder besonders genau mit in Federlängsrichtung orientierten Fasern aufgebaut sein, wobei die Fasern eine straffe Orientierung zulassen, sodaß keine Unstetigkeitstellen auftreten müssen. Weiters kann eine vollkommen exakte Form herausgearbeitet werden, wobei durch die Materialabtragung sichergestellt sein kann, daß der Faserverlauf entsprechend den Erfordernissen exakt verläuft, und daß nicht Inhomogenitätsstellen durch Kunststoffanreicherungen usw. auftreten. Durch die Verbindung von zumindest zwei Formkörpern, wobei beispielsweise ein Formkörper bereits die Augen angeformt haben kann, liegt eine besonders günstige Kombination von zwei verschiedenen Verfahren vor. Es besteht allerdings auch die Möglichkeit, daß der weitere Formkörper analog dem ersten Formkörper aus einem Faserblock herausgearbeitet wird, wobei dann beispielsweise die Möglichkeit besteht, daß jene Flächen, an welchen die Fasern geschnitten sind, miteinander verklebt werden. Durch die adhäsive und/oder chemische Verbindung der Formkörper untereinander, wird vermieden, daß durch lokale Krafteinleitungen eine Zerstörung der Feder an diesem Ort bevorzugt stattfindet.

Wird eine Materialabtragung mit mechanischen Werkzeugen, z.B. Fräsern, Sägen, Schneidplatten, od.dgl. durchgeführt, so kann, was durchaus völlig überraschend war, auch eine glatte Oberfläche ohne Unstetigkeitstellen erreicht werden, wodurch keine Desintegrationen auf der Oberfläche oder Verbindungsfläche der Feder vorhanden sind.

**0214113**

Gemäß einem weiteren Merkmal der vorliegenden Erfindung wird die Materialabtragung mittels Hochdruckfluidstrahles, z.B. Wasserstrahl, insbesondere mit einem Druck über 500 bar, durchgeführt. Ein derartiges Verfahren erlaubt hohe Schnittgeschwindigkeiten, wobei selbst geringste unterschiedliche Oberflächenausgestaltungen, wie sie beispielsweise durch Härteunterschiede, die Schnittfläche verändern könnten, vollauf vermeidbar sind. Weiters ist dadurch der Vorteil gegeben, daß die Umweltbelastung, insbesondere die Gesundheitsschädigung der Mitarbeiter beispielsweise durch Glasstaub und dgl. vollkommen vermieden wird.

Wird die Feder, vorzugsweise auf der durch Materialabtragung geformten Seite mit einer Auflage, insbesondere Umhüllung, mit faserverstärktem Kunststoff, z.B. kunststoffimprägniertes, insbesondere in Längserstreckung der Feder orientiertes Vlies, versehen, so können mechanischen Verletzungen der Feder, wie sie durch Steinschlag od. dgl. bedingt sind, sowie korrosivem Angriff, beispielsweise durch Salzstreuungen besonders günstig entgegengewirkt werden, wobei die Endgestaltgebung durch die materialabtragende Formgebung gewährleistet bleibt.

Wird, z.B. um eine Parabelfeder zu erhalten, lediglich die Druckseite materialabtragend geformt, so kann erreicht werden, daß nur an der Druckseite Fasern des faserverstärkten Kunststoffes an die Oberflächenschichte gelangen, sodaß die Zugseite höchsten Beanspruchungen gerecht werden kann, ohne daß zusätzliche Maßnahmen, beispielsweise Korrosionsschutz, noch erforderlich sind. Werden die Formkörper entlang der neutralen Ebene der Feder verbunden, insbesondere verklebt, so unterliegt die Klebeschicht einem besonders geringen Beanspruchungsprofil, wodurch auch bei der Klebung eine kurze Fertigungszeit realisierbar ist.

Werden die Formkörper unter Vorspannung zumindest eines
derselben, z.B. unter Durchbiegung, miteinander verbunden,
insbesondere verklebt, so kann eine besonders günstige
Spannungsverteilung in der Feder erreicht werden, wobei
gleichzeitig eine weitaus höhere Kraftaufnahme erreichbar ist, als bei nicht vorgespannten Formkörpern.

Werden die Formkörper unter Einschluß eines Raumes, insbesondere unter Bildung eines Zwischenraumes miteinander
verbunden, insbesondere verklebt,  so können beispielsweise
unter Beibehaltung der Breite Hyperbelfedern, also Federn
mit anderer Federcharakteristik, als jener einer Rechteckfeder, erhalten werden.

Der erfindungsgemäße Formkörper zur Durchführung des Verfahrens mit im wesentlichen parallel zueinander in und über
die Längserstreckung sich erstreckenden Fasern, z.B. Glas-,
Kohlenstoff-, Aramidfasern od. dgl., besteht darin, daß
der  Formkörper einen gekrümmten Bereich, insbesondere
mit parabelförmigen Konturen aufweist, in welchem im wesentlichen alle Fasern parallel zur Kontur verlaufen,
welche Kontur in die angrenzenden Bereiche übergeht, deren Kontur gerade, insbesondere etwa parallel zur großen
Achse der Parabel bzw. geringfügig hiezu geneigt übergeht, wobei auch in diesem Bereich die Fasern parallel
zur Kontur verlaufen.

Durch ein derartiges Formstück kann unter vollkommen paralleler Orientierung der Fasern eine Außenkontur hergestellt werden, wobei der Querschnitt und auch die Gestalt des Formkörpers beibehalten werden kann. Damit ist
eine strenge Parallelorientierung der Fasern im höchsten
Maß gewährleistet, wobei gleichzeitig jede beliebige
Außenkontur zumindest an einer Seite der Feder erhalten werden kann, sodaß bei geringstem Fertigungsaufwand
eine Feder mit hohem Eigenschaftsniveau erreichbar ist.

Im folgenden wird die Erfindung anhand der Beispiele und
der Zeichnung näher erläutert.

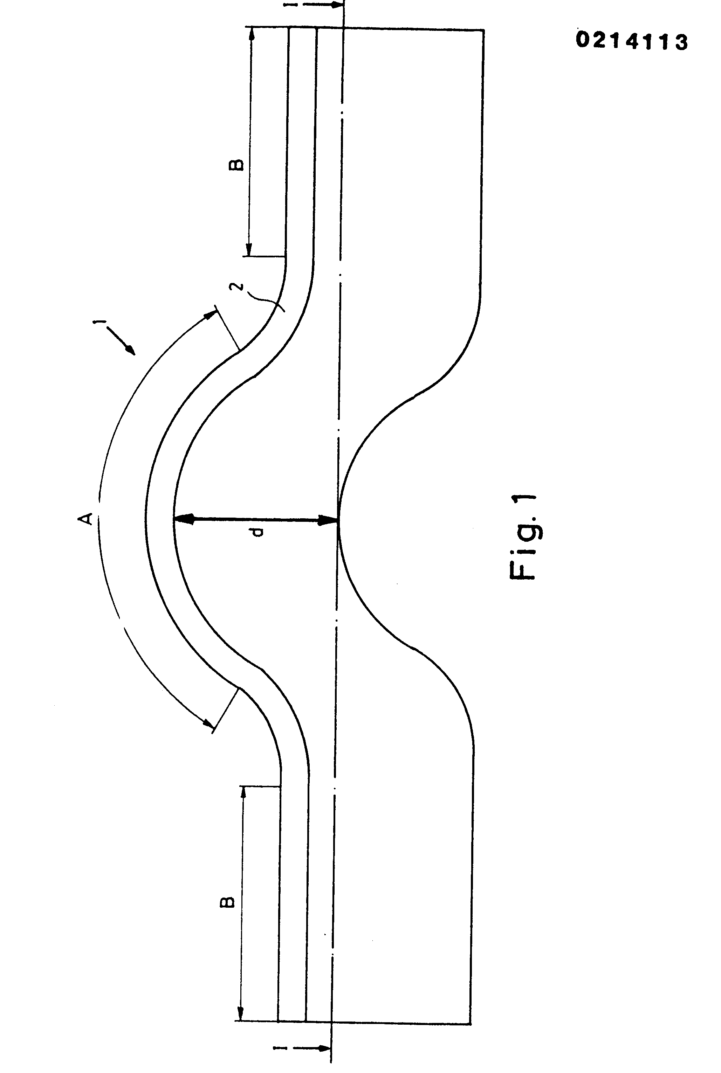

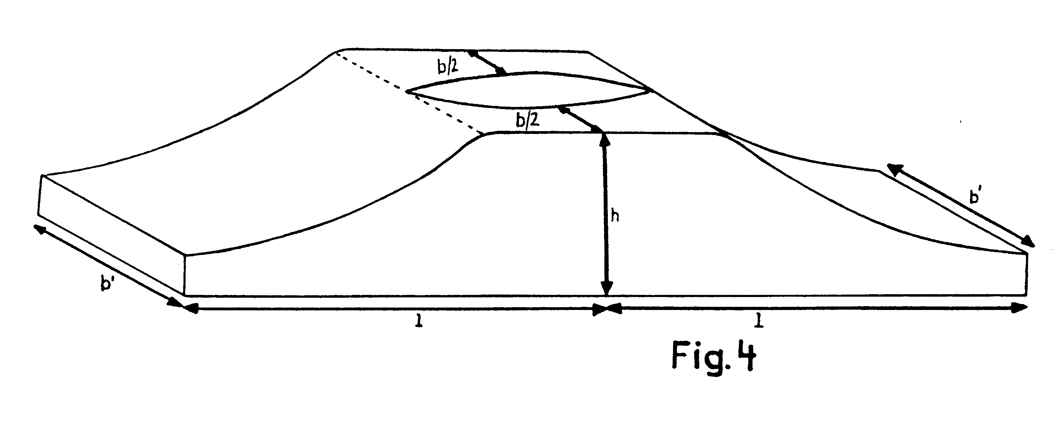

Es zeigen Fig. 1 einen Formkörper zur Herstellung einer Parabelfeder,

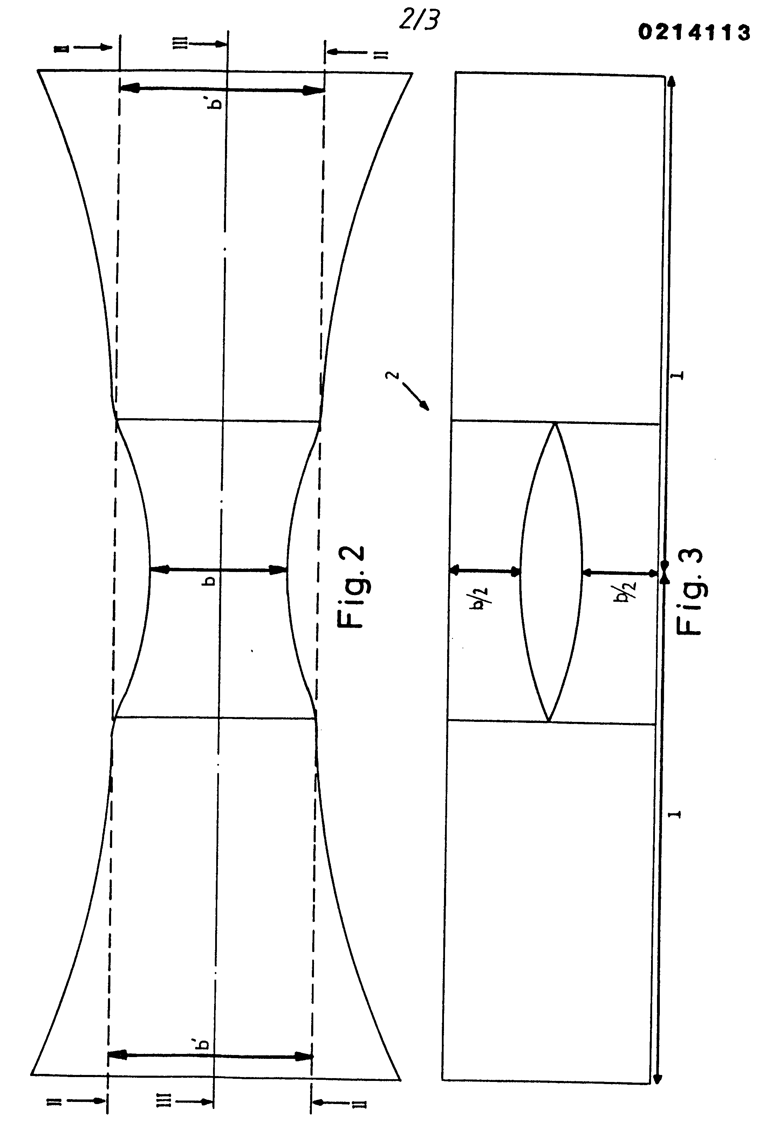

Fig. 2 einen Formkörper zur Herstellung einer Hyperbelfeder, Fig. 3
eine Hyperbelfeder von oben sowie Fig. 4 dieselbe in Schrägansicht.

Der in Fig. 1 dargestellte Formkörper 1 mit der Dicke d, aus
welchem eine Parabelfeder gefertigt werden soll, besteht aus einem
Block mit rechteckigem Querschnitt, welcher über eine gesamte Länge
durchgehende Glasfasern aufweist und einen Bereich A mit parabelförmiger Kontur und zwei Bereiche B mit im wesentlichen gerader Kontur
besitzt. Die einzelnen Fasern 2 sind genau parallel zur Kontur ausgerichtet, die teilweise der späteren Federform entspricht. Zur Fertigung einer Parabelfeder aus diesem Block ist es lediglich erforderlich, daß mit einer Säge entlang der Linie I/I geschnitten wird.
Vor dem Erhärten kann beispielsweise mit den Fasersträngen, die sich
oberhalb der Linie I/I befinden, Federaugen in herkömmlicher Weise
gebildet werden, wonach sowohl die Federaugen als auch
der restliche unausgehärtete Formkörper ausgehärtet werden, worauf der Schnitt I/I durchgeführt wird. Es kann
jedoch beispielsweise, um Federaugen oder Gleitstellen
anzuformen, eine Rechteckfeder angeklebt werden, die ebenfalls
aus faserverstärktem Kunststoff aufgebaut ist, welche die
Augen bzw. Gleitstellen aufweist.

Aus einem Formkörper gemäß Fig. 2, der eine im wesentlichen
über die Längsrichtung des Formkörpers sich erstreckende
gleichbleibende Querschnittsfläche aufweist, d.h. die Anzahl der Glasfasern oder anderen Fasern, wie Kohlenstoff-
oder Aramidfasern, ist konstant, wurde eine Hyperbelfeder gemäß Fig. 3 und 4 gefertigt, wobei bei einer Gesamtlänge der Hyperbelfeder von 2 $\ell$ und einer Maxialdicke h der Feder in der Mitte die Breite b an ihrer dicksten Stelle geringer ist, als an ihren Endbereichen, wo die Breite b' gleich b durch 0,5 - 0,8, z.B. 0,7 beträgt. Diese Breite b' weist die Feder entlang ihren beiden Endbereichen, die jeweils 0,5 - 0,8 $\ell$, z.B. 0,7 $\ell$ betragen, auf. Diese beiden Endbereiche nehmen noch in ihrer Dicke ab und zwar von ihrem Bereich, der zur Mitte hin mit einer Höhe von 0,5 - 0,8, z.B. 0,7 h bis zur Höhe h zunimmt, von welcher Höhe 0,5 - 0,8, z.B. 0,7 h der Endbereich an seinem einen Ende auf 0,2 - 0,5, z.B. 0,35 h abnimmt. Diese Höhen- und Endbereiche sind jeweils lediglich in etwa zu verstehen, wobei die Übergänge der einzelnen Bereiche untereinander nicht diskontinuierlich sondern stetig erfolgen. Der Formkörper gemäß Fig. 2 wird einerseits entlang der Linien II beschnitten, und sodann entlang der Linie III zweigeteilt, worauf die Teile gewendet und erneut durch einen Epoxidkleber miteinander verbunden werden. Die so erhaltene Hyperbelfeder 2 weist einen rechteckigen Grundriß auf, wobei der Mittenbereich jedoch gegenüber den beiden Endbereichen dicker ist.

Sowohl die Parabelfeder, welche mit dem Formkörper gemäß Fig. 1 gefertigt wurde, als auch die Hyperbelfeder gemäß Fig. 3 und 4 kann mit einem in Faserlängsrichtung orientierten Vlies, welches kunstharzimprägniert ist, versehen werden. Wie weiters ersichtlich, erfolgte die Bearbeitung bei der Parabelfeder gemäß Fig. 1 auf der Druckseite der Feder.

Patentansprüche:

1. Verfahren zur Herstellung von Blattfedern, insbesondere Federblättern, z.B. Parabelfedern, Hyperbelfedern od. dgl. mit faserverstärktem Kunststoff, z.B. Glas-, Kohlenstoff-, Aramidfasern, wobei ein Formkörper mit zumindest teilweise im wesentlichen in und über die Längserstreckung desselben erstreckenden Fasern mit Kunststoff, wobei insbesondere aus diese(n)(m) Fasern und Kunststoff auch Augen, Gleitstücke od. dgl. der Feder einstückig geformt werden, aufgebaut und gehärtet wird, dadurch gekennzeichnet, daß der Formkörper unter, insbesondere mechanischer, Materialabtragung von Fasern und Kunststoff und gegebenenfalls mit zumindest einem weiteren Formkörper, insbesondere adhäsiv und/oder chemisch, verbunden wird, welcher vorzugsweise ebenfalls unter, insbesondere mechanischer, Materialabtragung hergestellt wird, im wesentlichen zumindest Teile der Außenform der Feder endformend gebildet werden.

2. Verfahren zur Herstellung von Blattfedern nach Anspruch 1, dadurch gekennzeichnet, daß eine Materialabtragung mit mechanischen Werkzeugen, z.B. Fräsern, Sägen, Schneidplatten durchgeführt wird.

3. Verfahren zur Herstellung von Blattfedern nach Anspruch 1 oder 2, dadurch gekennzeichnet, daß eine Materialabtragung mittels Hochdruckfluidstrahles, insbesondere mit einem Druck über 500 bar, durchgeführt wird.

4. Verfahren zur Herstellung von Blattfedern nach einem der Ansprüche 1 bis 3, dadurch gekennzeichnet, daß die Feder, vorzugsweise auf der durch Materialabtragung geformten Seite mit einer Auflage, insbesondere Umhüllung mit faserverstärktem Kunststoff, z.B. kunststoffimprägniertes, insbesondere in Längserstreckung der Feder orientiertes Vlies versehen wird.

5. Verfahren zur Herstellung von Blattfedern nach einem der Ansprüche 1 bis 4, dadurch gekennzeichnet, daß lediglich die Druckseite der Feder materialabtragend geformt wird.

6. Verfahren zur Herstellung von Blattfedern nach einem der Ansprüche 1 bis 5, dadurch gekennzeichnet, daß die Formkörper entlang der neutralen Ebene der Feder verbunden, insbesondere verklebt werden.

7. Verfahren zur Herstellung von Blattfedern nach einem der Ansprüche 1 bis 6, dadurch gekennzeichnet, daß die Formkörper unter Vorspannung zumindest eines derselben z.B. unter Durchbiegung, miteinander verbunden, insbesondere verklebt, werden.

8. Verfahren zur Herstellung von Blattfedern nach einem der Ansprüche 1 bis 7, dadurch gekennzeichnet, daß die Formkörper unter Einschluß eines Raumes, insbesondere unter Bildung eines Zwischenraumes, miteinander verbunden, insbesondere verklebt werden.

9. Formkörper, mit einem gekrümmten Bereich zur Durchführung des Verfahrens nach einem der Ansprüche 1 bis 8, mit im wesentlichen parallel zueinander in und über die Längserstreckung sich erstreckenden Fasern, z.B. Glas-, Kohlenstoff-, Aramidfasern od. dgl., dadurch gekennzeichnet, daß der Formkörper (1) einen gekrümmten Bereich (A), insbesondere mit parabelförmiger Kontur aufweist, in welchem im wesentlichen alle Fasern parallel zur Kontur verlaufen, welche Kontur in die angrenzenden Bereiche (B) übergeht, deren Kontur gerade, insbesondere etwa parallel zur großen Achse der Parabel bzw. geringfügig hierzu geneigt übergeht, wobei auch in diesem Bereich die Fasern parallel zur Kontur verlaufen.

Fig. 1

A

1

B

2

B

d

1/3

0214113

0214113

Fig. 2

Fig. 3

Fig. 4

0214113